# EUROPEAN PATENT SPECIFICATION

(11) **EP 1 044 604 B1**
(45) Date of publication and mention of the grant of the patent: **02.10.2002**
(21) Application number: 99850062.3
(22) Date of filing: 12.04.1999
(51) Int. Cl.: A01K 63/04

(54) **Aquarium filter arrangement**
Filteranordnung für aquarien
Arrangement de filtrage pour aquarium

(43) Date of publication of application: 18.10.2000
(73) Proprietor: Malmström, Joel, 116 31 Stockholm (SE)
(72) Inventor: Malmström, Joel, 116 31 Stockholm (SE)
(74) Representative: Estreen, Lars

(56) References cited:
- DE-A- 4 200 310
- GB-A- 2 059 280
- US-A- 3 785 494
- US-A- 3 815 547
- US-A- 3 899 424
- US-A- 5 207 900

## Description

### FIELD OF INVENTION

The present invention relates generally to aquarium filter arrangements and more specifically to an improved filter arrangement, which combines an improved filtering function with an aesthetic appearance.

### BACKGROUND

When animals, such as fish, are to be maintained in an aquarium, the quality of the water in the aquarium must be maintained at a certain level. Therefore, there is often provided a filter arrangement in some way connected to the aquarium, the function of which filter arrangement is to filter the water in the aquarium.

There are several types of aquarium filters, of which can be mentioned mechanical filter in which waste material is physically trapped. These filters use filter material in the form of e.g. gravel, synthetic resin fibres or open-cell foam, e.g. polyurethane. With the exception of undergravel type of filters, a common feature of all these mechanical filters is that they are difficult to place in the aquarium in an aesthetically satisfying way.

The US patent publication 5,164,089 (Preston) discloses an aquarium filter assembly made of an open celled foam material. The filter body substantially defines a closed cavity and a passageway extends through the open celled foam material into the cavity. The aquarium filter assembly includes a means for mounting the filter body within the aquarium but spaced from interior surfaces thereof to permit unobstructed flow through substantially the entire filter body. This filter is very difficult to place in an aesthetically satisfying way.

The US patent publication 4,699,829 (Willinger) discloses ornamental artificial foliage provided with a rough, granular surface texture over and above that normally required for the aesthetic appearance of the foliage. The object of the provision of a rough texture is to aid in the propagation of bacteria for biological filtration of the aquarium water and to improve the life-like nature of the foliage. The filtering function is entirely bacterial and no pump arrangement is disclosed.

The US patent publication 3,815,547 (Willinger et al.) discloses a filtering device wherein a filter panel and a perforated panel supporting the filter panel divide an aquarium into two compartments.

The US patent publication 5,207,900 (Findell) discloses an absorbent sponge acting as a main filtering element for an aquarium filter placed on the bottom of the aquarium. The main object of Findell is to provide a balanced ecosystem.

### OBJECT OF THE INVENTION

An object of the present invention is to provide an aquarium filter, which combines an improved filtering function with a more aesthetic appearance, compared to known filter arrangements.

### SUMMARY OF THE INVENTION

The invention is based on the realisation that an artificial decoration placed in an aquarium can be given a filtering function by giving the decoration material suitable properties.

According to the present invention there is provided an aquarium filter as defined by claim 1.

Further preferred embodiments are defined by the dependent claims.

The invention provides an aquarium filter having an improved filtering function and a more aesthetic appearance, compared to known filter arrangements.

### BRIEF DESCRIPTION OF DRAWINGS

The invention is now described, by way of example, with reference to the accompanying drawings, in which:
Fig. 1 is a top view of a filter arrangement according to a first embodiment of the invention; and
Fig. 2 is a front view of the filter arrangement shown in fig. 1.

### DETAILED DESCRIPTION OF THE INVENTION

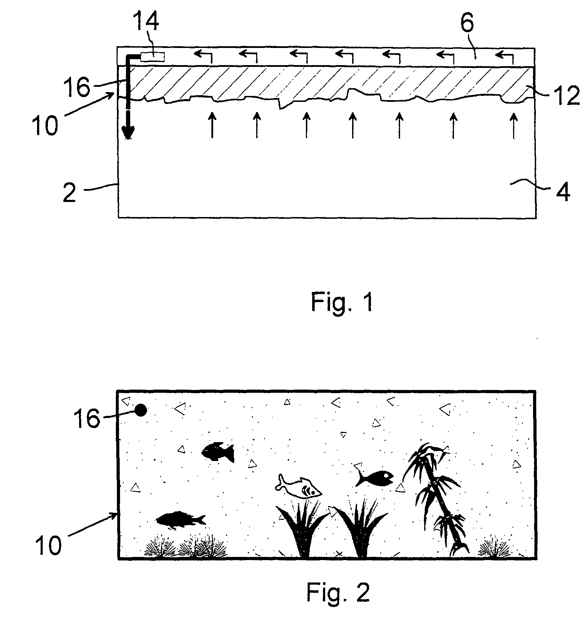

In the following, a detailed description of preferred embodiments of the invention will be given. In fig. 1 is shown a top view of a filter arrangement, generally designated 10 placed in an aquarium 2 filled with water. The filter arrangement 10 comprises a filter body 12, a pump 14 and a pipe 16 connected to the pump and arranged through the filter body 12. Thus, the filter body 12 divides the aquarium into two compartments: one front compartment 4 in front of the filter body and one back compartment 6 behind the filter body.

In fig. 2, a front view of the aquarium in fig. 1 is shown. It is seen that the only aesthetic disturbance is the pipe 16 ending in front of the filter body 12. However, also this could be avoided by having the pipe 16 end just before the front surface of the body 12, i.e., by making the hole in the body arranged for the pipe 16 stop before it penetrates the front surface.

In operation, water is circulated from the front compartment 4, through the filter body 12 and to the back compartment 6 and back again through the pump 14 and the pipe 16 to the front compartment as indicated by the arrows in fig. 1. In that way, the entire filter body 12 functions to filter the water flowing through it.

In order to ensure a relatively uniform flow of water through the filter body and that no water leaks from the front compartment to the back compartment, it is important that the body abuts against the walls of the aquarium. Also, the filter body 12 is placed tightly against the bottom material of the aquarium and has a sufficient height to extend above the water surface.

The filter body 12 is made of some suitable filter material, such as polyurethane. An important characteristic of the filter material is that it is self-supporting, i.e., the filter body needs no extra support in order to function properly. In order to give the filter body an aesthetically appealing surface, it is treated either mechanically or chemically. Also, the filter body can be moulded in a cast wherein its surface is given a natural appearance. In that way, the filter body 12 also functions as a background of the aquarium, thus replacing the kind of background conventionally found in aquariums. The surface can be given a structure resembling any natural configuration, such as stone, tree roots, organic underwater surface etc.

An advantage with the filter arrangement according to the invention is that it is easy to clean. The pipe 16 is simply disconnected from the pump 14, the filter body 12 is removed from the aquarium, rinsed by means of water from a water tap and returned into place in the aquarium. Because the preferred filter material, polyurethane, is flexible, it is simply slightly compressed when removed from and returned to the tank, and in the latter case, the filter body expands, thus pressing against the side walls of the aquarium. During this cleaning operation, the pump 14 can remain in the aquarium if so desired.

Besides being aesthetically appealing, the filter arrangement according to the invention has also the advantage, that a larger filter surface can be used, thus improving the flowing through the filter body and thereby the filtering function. When conventional internal aquarium filters are limited to a small part of the aquarium space, because otherwise they would occupy too much space for the fish, vegetation, background etc., the area of e.g. the entire back wall can be used by the filter according to the invention.

Another advantage with the filter arrangement according to the present invention is that it can be used as a platform for vegetation. Plants can be placed with their stalks in the filter body, whereby an even more natural and appealing background is achieved.

The described aquarium filter assembly is manufactured in the following way. Initially, a workpiece of filter material is shaped so as to resemble a natural configuration. Thereafter, a compartment is created in the workpiece for housing an aquarium filter pump. In order to complete the assembly, a pump is placed in the compartment and a pipe is connected to the pump. This pipe is arranged through the filter material.

A preferred embodiment of a filter arrangement according to the invention has been described. A person skilled in the art realises that this can be varied in several ways.

The pump and pipes can of course be placed anywhere in the back compartment or externally, as long as water is circulated in a satisfying way through the filter body 12.

The filter bodies defining an interior compartment can be either open-topped, as suggested in the embodiment shown in fig. 1, or closed-topped. The latter alternative must of course be used when the filter body does not extend all the way from the bottom of the aquarium to the water surface.

## Claims

1. An aquarium filter, comprising:
- a filter body (12) made of a material with a filtering function and adapted to be placed in an aquarium (10) so that said filter body divides the aquarium volume into a first (4) and a second (6) compartment, wherein
- the filter body is arranged to co-operate with a pump (14) arranged to displace water from the first compartment, through the filter body (12) and into the second compartment (6) and means (16) for returning filtered water in the second compartment to the first compartment,
- the filter body (12) has a shape as to cover essentially the entire back wall of the aquarium,
- the filter body (12) is so shaped as to form a natural decoration of the aquarium, and
- the surface of the filter body visible to a viewer of the aquarium is given a texture resembling natural material,
**characterized in that**
- the filter body (12) is self-supporting, and
- the filter body (12) is made of open-celled foamed plastic material.

2. An aquarium filter arrangement according to claim 1, wherein the filter body (12) is made of polyurethane.

3. An aquarium filter arrangement according to claim 1 or 2, wherein the filter body (12) is adapted to be used as a platform for vegetation.

## Patentansprüche

1. Aquariumfilter, umfassend:
einen Filterkörper (12) bestehend aus einem Material mit Filterfunktion und angepasst, um in einem Aquarium (10) plaziert zu werden, so daß der Filterkörper den Rauminhalt des Aquariums in ein erstes (4) und ein zweites (6) Kompartiment teilt, worin
der Filterkörper angeordnet ist, um mit einer Pumpe (14) zu kooperieren, angeordnet, um Wasser aus dem ersten Kompartiment durch den Filterkörper (12) und in das zweite Kompartiment (6) zu verschieben und Mittel (16) zur Rückführung des im zweiten Kompartiment gefilterten Wassers in das erste Kompartiment,
der Filterkörper (12) eine Form hat, um im wesentlichen die gesamte Rückwand des Aquariums abzudecken,
der Filterkörper (12) so geformt ist, um eine natürliche Dekoration des Aquariums zu bilden, und
der Oberfläche des Filterkörpers, sichtbar für einen Betrachter des Aquariums, eine Struktur gegeben ist, die natürlichem Material gleicht,
**dadurch gekennzeichnet, daß**
der Filterkörper (12) selbsttragend ist, und
der Filterkörper (12) aus offenporigem, geschäumten Plastikmaterial besteht.

2. Aquariumfilteranordnung nach Anspruch 1, worin der Filterkörper (12) aus Polyurethan besteht.

3. Aquariumfilteranordnung nach Anspruch 1 oder 2, worin der Filterkörper (12) angepasst ist, um als Plattform für Vegetation verwendet zu werden.

## Revendications

1. Un filtre d'aquarium, comprenant :
- un corps de filtre (12) fait d'un matériau avec une fonction de filtration et adapté pour être placé dans un aquarium (10) de sorte que ce corps de filtre divise le volume de l'aquarium en un premier (4) et un second (6) compartiment, où
- le corps de filtre est disposé de manière à coopérer avec une pompe (14) disposée de manière à déplacer l'eau depuis le premier compartiment, au travers du corps de filtre (12) et jusque dans second compartiment (6) et avec des moyens (16) pour renvoyer l'eau filtrée dans le second compartiment vers le premier compartiment,
- le corps de filtre (12) a une forme telle qu'il couvre essentiellement toute la paroi arrière de l'aquarium,
- le corps de filtre (12) est conformé de manière à présenter une décoration naturelle de l'aquarium, et
- on a donné à la surface du corps de filtre visible par un observateur de l'aquarium une texture ressemblant à un matériau naturel,
**caractérisé en ce que**
- le corps de filtre (12) est autoporteur, et
- le corps de filtre (12) est formé d'un matériau plastique en mousse à cellules ouvertes.

2. Une configuration de filtre d'aquarium selon la revendication 1, où le corps de filtre (12) est fait de polyuréthanne.

3. Une configuration de filtre d'aquarium selon la revendication 1 ou 2, où le corps de filtre (12) est adapté pour être utilisé comme plate-forme pour de la végétation.
